# EUROPEAN PATENT APPLICATION

(11) **EP 2 853 426 A2**
(43) Date of publication of application: **01.04.2015**
(21) Application number: 14184032.2
(22) Date of filing: 09.09.2014
(51) Int. Cl.: B60J 7/08, B60J 5/10

(54) **System for automatic lift of cover for a transport body**

(30) Priority: 30.09.2013 DK 201300558
(71) Applicant: Sporring Karrosseriefabrik V/Jakob Usen Jensen, 8380 Trige (DK)
(72) Inventor: Jensen, Jakob, 8380 Trige (DK)
(74) Representative: Olesen, Birthe Bjerregaard

(57) **Abstract**

The present invention relates to a system for automatic lift of covers for a transport body, such as a platform on a lorry, trailer, or a container, which transport body being covered by at least one flexible cover, which transport body comprises a dump body. It is a first object of the pending patent application to achieve an automatic lift of a cover at a lorry or container when a dump body is activated. A further object of the pending patent application is to keep the cover in place when activating the dump body. The objects can be achieved by a system where the transport body comprises two or more longitudinal side members, which longitudinal side members are mechanically connected to at least one downward oriented wheel or wheels, which wheel or wheels are lifted by the dump body by opening the dump body. Hereby it can be achieved that it is possible to unload a transport body without removing the cover of the transport body before unloading. In that way it is also assured that the cover for the transport body will remain at the transport body when a lorry or a container is returning.

## Description

### Field of the Invention

The present invention relates to a system for automatic lift of covers for a transport body, such as a platform on a lorry, trailer, or a container, which transport body being covered by at least one flexible cover, which transport body comprises a dump body.

### Background of the Invention

EP2505399 disclose a cover for a transport body, such as a platform on a lorry, trailer, or a container, the transport body being covered by at least one flexible cover, the cover capable of being rolled up around a shaft by opening, where hydraulic cylinders by means of pivotable arms force the shaft to perform a curving movement above the transport body. The purpose of the invention is to provide a reliable automatic device for covering a transport body, thereby ensuring that the cover is applied during all driving with empty as well as full transport body. The purpose can be achieved if the flexible cover is fastened to a first of the sides of the transport body, the flexible cover having a fold formed by a rubber strap where the rubber strap is fastened to the flexible cover at both sides of the fold.

### Object of the Invention

It is a first object of the pending patent application to achieve an automatic lift of a cover at a lorry or container when a dump body is activated.

A further object of the pending patent application is to keep the cover in place when activating the dump body.

### Description of the Invention

The objects can be achieved by a system as disclosed in the preamble of claim 1 and further modified in that the transport body comprises two or more longitudinal side members which longitudinal side members at a first end are pivoted at the top of the sides of the transport body, which longitudinal side members at the second ends are mechanical connected to at least one down ward oriented wheel or wheels, which wheel or wheels are lifted by the dump body by opening the dump body.

Hereby it can be achieved that it is possible to unload a transport body without moving the cover of the transport body before unloading. In that way it is also assured that the cover for the transport body will remain at the transport body when a lorry or a container is returning maybe for collecting the next load. In that way is achieved that the energy consumption of a lorry is reduced maybe with up to 10% because the cover at the top of a transport body is reducing the aerodynamic resistance against driving. Therefore, by the pending patent application will the back end of the cover for transport body automatically be raised by the dump body by opening the dump body. As soon as the dump body is closed and returned to its closed position, the cover for the transport body will automatically return back to its normal driving position.

In a preferred embodiment for the patent application can the upper part of the dump body comprise one or more protrusions, which protrusion interacts with at least one of the wheels. Hereby it can be achieved that depending on the actual size of the top of a dump body can protrusions for interacting with the wheels such as rails be welded at the top of the dump body and in that way it can be achieved that a standard module for raising the cover of the transport body can be used with different dump bodies in that they can be adapted to get in touch with the wheels at the longitudinal side members. It is possible by the pending application not to place the wheels directly at the side members but instead place the wheels in relation to a bridge that is connecting the longitudinal side members. At this bridge one or more wheels can be placed which wheels can be in contact with rails placed at the dump body.

In a further preferred embodiment for the invention can the cover for a transport body be formed as a flexible cover which cover is capable of being rolled up around a shaft by opening, which shaft is interacting with at least one hydraulic cylinder which by means of pilotable arms forces the shaft to perform a curving movement above the transport body, where the shaft is connected with rotary means that rotate the shaft during the curving movement. Hereby can be achieved that the cover of a transport body can be rolled on and off in an automatic way where for example the lorry driver simply has to activate a hydraulic actuator maybe by a remote control where as soon as the driver has activated the system, the roll or unroll process is performed automatically. Especially in combination with the previous described lifting system can be achieved that the whole automatic equipment for automatic remove or place the cover is lifted so there will be no conflict with dump bodies which in some situations are hinged at the transport body in a way where they increase the total height of the back end of the transport body when activated. In that situation it is very important that a bridge that is connecting the longitudinal side members is lifted automatically in a situation where the dump body is activated.

In a further preferred embodiment for the invention can the flexible cover be fastened to a first of the sides of the transport body, whereby the flexible cover can be fastened to the shaft, that by covering the transport body the shaft bears against the top of the transport body, that the flexible cover has a fold formed by a rubber straps, that the rubber straps are fastened to the flexible cover at both sides of the fold. By designing the flexible cover with a fold which is perpetually drawn together by a rubber strap disposed in zig-zag and fastened to both sides of the fold, it is achieved that if the load is higher than allowed by the immediate covering, the flexible cover becomes additionally flexible in that the rubber strap and the fold formed by means of the rubber strap are just extended such that an automatic extension of the flexible cover is provided, either locally where a higher loader is possibly present or along the entire length of the load. In that way is achieved a complete adaptation of the flexible cover, and a flexibility is achieved as well in that the cover is retained by a force which is determined by the rubber strap but with a flexibility providing that possible wind action on the tarpaulin allows a certain yield ability such that a strong wind action on the tarpaulin will allow a modest lift to a certain degree of the tarpaulin, and correspondingly, during strong rain, a depression of the tarpaulin can occur in that a partial un-folding of the fold is effected, and the rubber strap can ensure a constant tension in the flexible cover. At the same time, the flexible cover has the advantage that if water, snow, or ice is accumulated on the flexible cover, a rolling up can be effected automatically and a subsequent automatic unrolling as well, which can be effected in a very few minutes, after which water, snow, or ice will automatically be removed from the flexible cover.

In a further preferred embodiment for the invention can the flexible cover consists of a permanently mounted first section and a second, roll able section, that the permanently mounted first section has a side which is fastened by at least one flexible fastening means to a first of the sides of the transport body, that the roll able second section of the flexible cover is fastened to the first side of the transport body as well, that the first and second sections of the flexible cover are joined along the fold in the second section of the flexible cover, whereby the fold in the second section is covered by the first section. Hereby is achieved a self-tightening action by the flexible cover which due to the resilient mounting of the two tarpaulin parts is also present by loads with top on the goods while at the same time the wide straps at each end edge of the tarpaulin, by means of the mounting with rubber straps, will ensure that the tarpaulin is held tightly against the edge of the transport body. A tight tarpaulin does not flutter during driving, ensuring reduced fuel consumption and thereby CO₂ emission while simultaneously increasing the durability of the tarpaulin.

In a further preferred embodiment for the invention can each end of the shaft is seated in a pivotable arm which is provided with a reel arrangement for reeling a wire on and off, that the wire is fastened at one end by a helical spring to the transport body and at the other end wound around the shaft with a direction of winding which is opposite relative to the flexible cover. Automatic rotation of the shaft may thus occur by means of a wire such that the shaft rotates automatically during rolling the flexible cover on or off. Based on the fact that a wire necessarily has a greater length at the middle of the movement of the arms from one outer side to the other, it is required that a helical spring automatically has hold of the end of the wire such that a constant tensile force is ensured in the wire.

In a further preferred embodiment for the invention can each end of the shaft be seated in the pivotable arms where the shaft is connected to a hydraulic motor, that the motor is designed with a torque limiter for adapting the torque on the shaft to winding the flexible cover on or off, respectively. Since a hydraulic system for activating the pivotable arms is already present, it is a matter of course to provide a hydraulic motor with pressure and return lines through the pivotable arms such that the shaft can be rotated by a hydraulic motor. As the torque to be produced determines the force with which the flexible cover is pulled, it will be expedient if the motor applies a constant torque on the shaft. By a suitable choice of regulating valves for the hydraulic motor it will be possible to operate with different torque, depending on whether rolling off or rolling on of the flexible cover is taking place.

In a further preferred embodiment for the invention can the pivotable arms, hydraulic cylinders, wire devices or hydraulic motor are designed such that they can be mounted at a level on the chassis of the transport body which will enable opening of the transport body at the rear. Hereby is achieved possibility of opening the tailboard of the transport body, thereby ensuring rapid unloading of goods by dump body, or unhindered access to the transport body by cleaning, for example.

In a further preferred embodiment for the invention can the flexible cover be formed by a segmented tarpaulin where the individual tarpaulin parts preferably are secured by using elastic rubber straps mounted in a zig-zag pattern. Using plastic rubber straps in a zig-zag pattern may entail that a flexible fastening of the tarpaulin parts may occur such that these tarpaulin parts adapt themselves to the load present that may exist on the tarpaulin covering a load. The rubber straps will thus under all circumstances keep the tarpaulin in tension, irrespective of the tarpaulin being pushed upwards by too high load or downwards due to ice, snow, or water possibly lying on the tarpaulin.

In a further preferred embodiment for the invention can the shaft comprise a groove in the pivotable shaft for fastening the cover to the shaft, the groove being formed in an extruded tubular profile, preferably made of plastic, aluminium or metal, with a groove for fastening the cover in the pivotable shaft. The design of the shaft of an extruded item provides that shafts can be made in optional lengths, and it becomes possible to produce shafts relatively cheaply but on the other hand very efficiently since it becomes possible to form the shaft with the necessary grooves. In addition to a groove for fastening the flexible cover, the shaft may also contain e.g. channels utilised as hydraulic piping internally of the extruded profile.

In a further preferred embodiment for the invention can the pivotable arms be designed with a bend whereby the shaft and the fastening of the hydraulic cylinder is elevated in relation to the fastening of the pivotable arm on the transport body. By letting the pivotable arms have a bend it can be achieved that fastening of the pivotable arms and fastening of the hydraulic cylinder may be provided at the same level on a transport body, whereby it becomes possible to provide pivotable arms and hydraulic cylinder at approximately the same level and in any case above possible doors that can be opened at the end of e.g. a lorry platform. By using a bend on the pivotable arms a positive force can thus obtained at any position for the work of the hydraulic cylinder. It is thus avoided that the hydraulic cylinder becomes locked in a certain situation because pressure appears, e.g. on the arm, where the pressure against the arm is directed towards the fastening centre of the arm, whereby any movement of this arm cannot take place.

The pending patent application further disclose a method for automatic lift of covers for a transport body as previous disclosed by at first start opening the dump body, let the upper part of the dump body get in touch with the wheels, continue opening of the dump body, lift he wheels and the longitudinal side members. Hereby it is achieved that the automatic lift of the covers of a transport body is performed in an automatic way where no activity is necessary from the driver or from other personnel. Hereby can be achieved that a cover of the transport body is kept in place during unloading of the transport body so when a lorry afterwards returns empty the cover of the transport body will still be in place. Hereby can the fuel consumption of the truck be reduced with up to 10%. Further can be achieved that the cover by flexible means is kept straight so aerodynamic induced differences between high and low pressure over the transport body is not letting the cover start fluttering. By this system is avoided that a driver is removing his cover of the transport body before emptying his load and in order to save the work of placing the cover again the driver returns to his start position with the cover folded and placed at the lorry. In the future many transport bodies will have automatic covers that automatically can be rolled on the top of the transport body and in the same way by automatic means be unrolled if necessary.

### Description of the Drawing

Fig. 1 discloses one possible embodiment for the invention.
Fig. 2 shows same embodiment as in fig. 1, but now in a situation where the dump body is closed.
Fig. 3 shows the same system 2 as previous described, but now seen from the opposite side.
Fig. 4 shows an enlarged picture of one possible embodiment for a system 2

### Detailed Description of the Invention

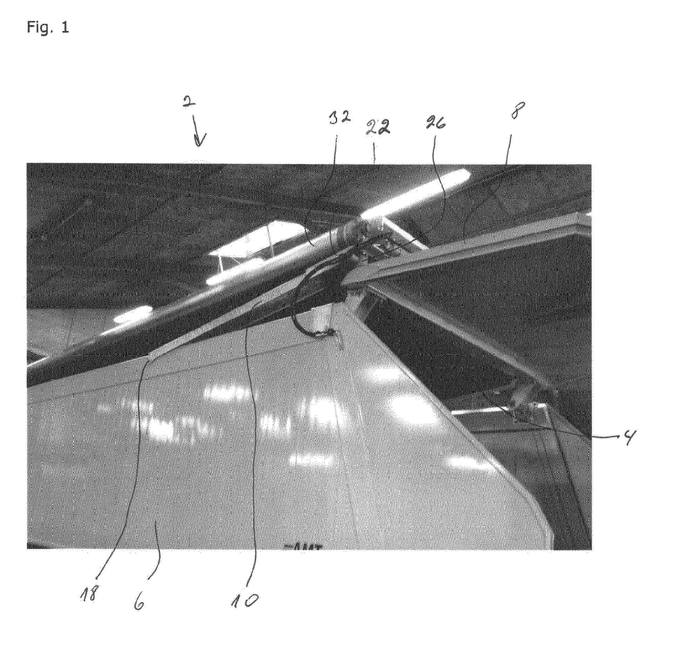

Fig. 1 discloses one possible embodiment for the invention where a system 2 is seen from the left side of a transport body 6. A cover 4 is indicated, but here seen from below, this cover 4 covers a transport body 6. Further is indicated a dump body 8, which dump body 8 is open and it is through the opening it is possible to see the cover 4. Further at fig. 1 is indicated a longitudinal side member left 10, this longitudinal side member 10 is pivoted at the second end at a pivoting member 18. Further is indicated a second end 22 of the longitudinal side member at the left side. This second end 22 carries a wheel 26. Further is indicated a shaft 32, which shaft 32 is used for unrolling the cover 4.

It can be seen at fig. 1 that the dump body 8 is open and that the upper part of the dump body has performed a lifting action at the wheel 26. This wheel 26 is then performing a lift of the longitudinal side member 10. In this way it is achieved that the dump body 8 can be opened without any conflict with the cover 4 and maybe an automatic unrolling system using the shaft 32. Hereby is achieved that it is possible to unload a lorry without removing the cover 4. This leads automatic to a situation where the empty transport body 4 can return with the cover in place and in that way reduce the energy consumption of a truck.

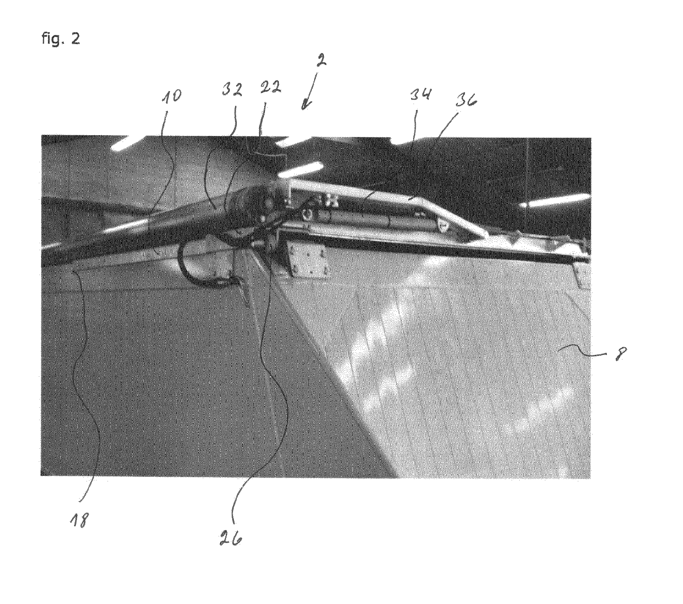

Fig. 2 shows same embodiment as in fig. 1, but now in a situation where the dump body is closed. The system 2 is therefore to be seen in some more details. 8 indicates the dump body and 10 indicates the longitudinal side member left, where 18 indicates the pivoting member of the longitudinal side member left 10. Further is indicated the second end 22 of the longitudinal side member left and the wheel 26 which is now not in use. Further is indicated the shaft 32, which shaft is carried by the pivotable arm 36, which arm 36 is to be activated by the hydraulic cylinder 34.

In operation the hydraulic cylinder 34 will when pressurized force the pivotable arm 36 to perform a rotational movement carrying the shaft 32 which performs a rolling activity and rolls the cover around the shaft 32. Returning the operation is performed by pressurizing the opposite end of the hydraulic cylinder 34, which will return the shaft 32 to the indicated position and perform an unrolling of the cover and placing the cover correct above transport body 6.

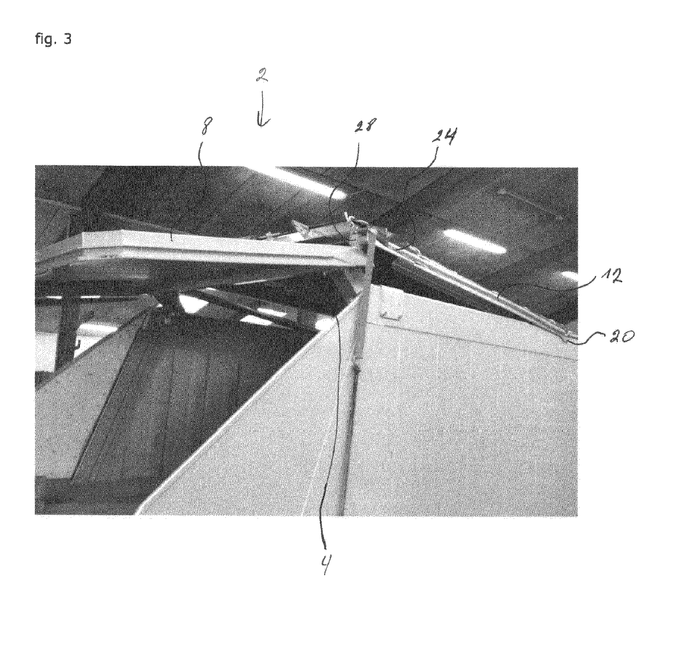

Fig. 3 shows the same system 2 as previous described, but now seen from the opposite side. The dump body 8 is now open and the cover 4 is indicated through the opening. Further is indicated the longitudinal side member right with a number 12. This longitudinal side member right 12 is connected to the pivoted member 20. Further is indicated the second end of the longitudinal side member 24, which is connected to the wheel 28.

It can also be seen from the opposite side at fig. 3 that the dump body 8 is able to force the wheel 28 to perform an upwards movement where the longitudinal side member 12 is turning around the pivoting member 20.

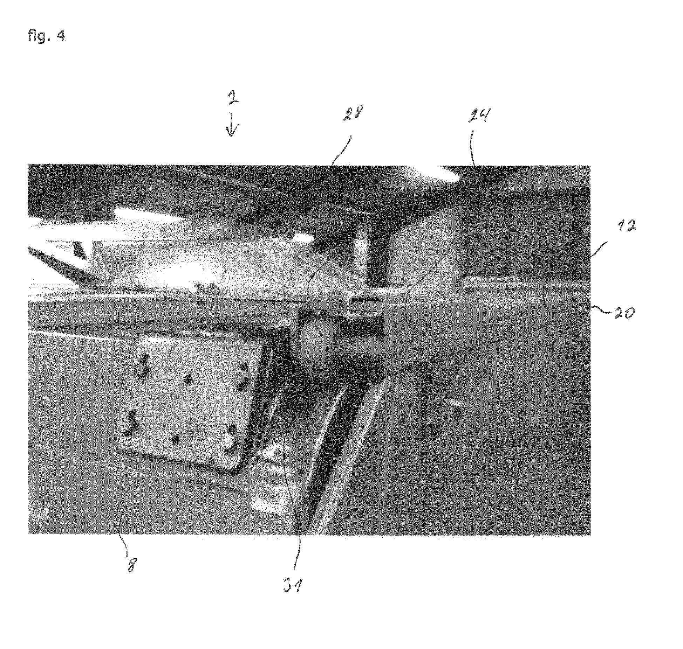

Fig. 4 is an enlarged picture of one possible embodiment for a system 2. At fig. 4 is indicated the dump body 8 and the longitudinal side member right with the number 12. This longitudinal side member 12 is hinged at the pivoting member 20. The other end 24 of the longitudinal side member right 12 is mechanical connected to the wheel 28. It can be indicated that this wheel is rolling at a track or rail 31.

Placing a track or a rail for the wheel 28 to roll on can be necessary in order to have sufficient mechanical force in the upper part of the dump body 8.

It is possible by the pending application also to place the wheels 26 or 28 different in relation to the longitudinal side members. The only thing which is important is that the wheels are placed in a way in which they are performing a lift of the side members. Therefore, the wheels can be placed more or less in the centre of the dump body or maybe more wheels could be necessary. In fact only one wheel which has sufficient force placed in the middle will be one possible embodiment for the invention.

### Notations

2: System
4: cover
6: transport body
8: dump body
10: longitudinal side member left
12: longitudinal side member right
14: first end of longitudinal side member left
16: first end of longitudinal side member right
18: pivot
20: pivot
22: second end of longitudinal side member left
24: second end of longitudinal side member right
26: wheel left
28: wheel right
30: upper part of dump body 8
31: protrusion at upper part of the dump body 8
32: shaft
34: hydraulic cylinder
36: pivotable arm

## Claims

1. System (2) for automatic lift of covers (4) for a transport body (6), such as a platform on a lorry, trailer, or a container, which transport body (6) being covered by at least one flexible cover (4), which transport body (6) comprises a dump body (8), **characterized in that** the transport body (6) comprises two or more longitudinal side members (10,12), which longitudinal side members (10,12) at a first end (14,16) are pivoted (18,20) at the top of the sides of the transport body (6), which longitudinal side members (10,12) at the second ends (22,24) are mechanical connected to at least one down ward oriented wheel or wheels (26,28), which wheel or wheels (26,28) are lifted by the dump body (8) by opening the dump body (8).

2. System according to claim 1, **characterized in that** the upper part (30) of the dump body (8) comprises one or more protrusions (31), which protrusion interacts with at least one of the wheels (26,28).

3. System according to claim 1 or 2, **characterized in that** the cover (4) for a transport body (6) is a flexible cover (4), the cover (4) capable of being rolled up around a shaft (32) by opening, the shaft (32) interacting with at least one hydraulic cylinder (34) which by means of pilotable arms (36) forces the shaft (32) to perform a curving movement above the transport body (6), where the shaft (32) is connected with rotary means that rotate the shaft (32) during the curving movement.

4. System according to claim 3, **characterised in that** the flexible cover (4) is fastened to a first of the sides of the transport body (6), that the flexible cover (4) is fastened to the shaft (32), that by covering the transport body the shaft (32) bears against the top of the transport body (6), that the flexible cover has a fold formed by a rubber straps, that the rubber straps are fastened to the flexible cover (4) at both sides of the fold.

5. System according to claim 3 or 4, **characterised in that** the flexible cover (4) consists of a permanently mounted first section and a second, reliable section, that the permanently mounted first section has a side which is fastened by at least one flexible fastening means to a first of the sides of the transport body, that the reliable second section of the flexible cover is fastened to the first side of the transport body (6) as well, that the first and second sections of the flexible cover (4) are joined along the fold in the second section of the flexible cover, whereby the fold in the second section is covered by the first section.

6. System according to one of the claims 1-5, **characterised in that** each end of the shaft (32) is seated in a pivotable arm (36) which is provided with a reel arrangement for reeling a wire on and off, that the wire is fastened at one end by a helical spring to the transport body (6) and at the other end wound around the shaft (32) with a direction of winding which is opposite relative to the flexible cover (4).

7. System according to one of claims 1-5, **characterised in that** each end of the shaft (32) is seated in a pivotable arm (36) where the shaft (32) is connected to a hydraulic motor, that the motor is designed with a torque limiter for adapting the torque on the shaft to winding the flexible cover (4) on or off, respectively.

8. System according to one of claims 1-7, **characterised in that** pivotable arms (36), hydraulic cylinders, wire devices or hydraulic motor are designed such that they can be mounted at a level on the chassis of the transport body (6) which will enable opening of the transport body (6) at the rear.

9. System according to one of claims 1-8, **characterised in that** the flexible cover (4) is formed by a segmented tarpaulin where the individual tarpaulin parts preferably are secured by using elastic rubber straps mounted in a zig-zag pattern.

10. System according to one of claims 1-9, **characterised in that** the shaft (32) comprises a groove in the pivotable shaft (32) for fastening the cover (4) to the shaft (32), the groove being formed in an extruded tubular profile, preferably made of plastic, aluminium or metal, with a groove for fastening the cover (4) in the pivotable shaft (32).

11. System according to one of claims 1-10, **characterised in that** the pivotable arms (36) are designed with a bend whereby the shaft (32) and the fastening of the hydraulic cylinder is elevated in relation to the fastening of the pivotable arm (36) on the transport body (6).

12. Method for automatic lift of covers (4) for a transport body (6) as disclosed in one of the claims 1-11, **characterized in** the following sequence of steps:
a. start opening the dump body (8),
b. let the upper part of the dump body (8) get in touch with the wheels (22,24),
c. continue opening of the dump body (8)
d. lift he wheels (22,24) and the longitudinal side members (10,12).
